# DEMANDE DE BREVET EUROPEEN

(11) **EP 1 689 159 A1**
(43) Date de publication de la demande: **09.08.2006**
(21) Numéro de dépôt: 06300094.7
(22) Date de dépôt: 31.01.2006
(51) Int. Cl.: H04M 11/04, H04M 11/00, H04M 3/42

(54) **Procédé d'identificatoin d'un terminal fixe**

(30) Priorité: 04.02.2005 FR 0550318
(71) Demandeur: Sagem Communication, 75512 Paris Cedex 15 (FR)
(72) Inventeur: Kanaan, Nadi, 75016 Paris (FR); Leloup, Philippe, 94130 Nogent sur Marne (FR); Rotter, Harald, 1170 Wien (AT)
(74) Mandataire: Camus, Olivier Jean-Claude

(57) **Abrégé**

Dans l'invention, on propose que des terminaux fixes (100 ;109), qui sont dans une situation où ils sont susceptibles d'échanger des informations avec un réseau distant (102) donné, procèdent à une opération d'identification auprès de ce réseau distant. A cet effet, on propose, dans l'invention, de transmettre un message d'identification (111) depuis chaque terminal fixe concerné vers le réseau distant considéré, des données dudit message étant mémorisées dans une base de données (110) du réseau distant. Le message d'identification est émis suite à la détection d'un événement particulier, temporel ou mécanique, intervenant au sein de chaque terminal fixe considéré. Avantageusement, le réseau distant constitue une base de données, à partir des messages d'identification reçus, commune pour l'ensemble des terminaux fixes, quels que soient leur nature et leur type.

## Description

### DOMAINE TECHNIQUE DE L'INVENTION

La présente invention a pour objet un procédé d'identification, au sein d'un réseau distant, d'un terminal fixe, ledit terminal étant apte à communiquer, par exemple par l'intermédiaire du Réseau Téléphonique Commuté (RTC) ou par l'intermédiaire du réseau numérique à intégration de services (RNIS), avec un ensemble d'équipements informatiques constituant ledit réseau distant géré par un opérateur. L'invention a notamment pour but de provoquer l'enregistrement auprès d'un réseau distant d'un ensemble de terminaux fixes, éventuellement de nature et de type différents, capables de communiquer avec ledit réseau ; une telle identification auprès d'un réseau distant permet par exemple la création ou la mise à jour d'une base de données gérées par ledit réseau, notamment pour que ce dernier dispose, de façon relativement précise, d'une information relative à la quantité de données qu'il est susceptible de devoir gérer dans une période donnée.

Préalablement à la description de l'invention en elle-même est proposé, afin de fixer le vocabulaire employé, un lexique relatif à différents termes qui seront employés ultérieurement :
- réseau informatique: ensemble d'ordinateurs, associés à leurs éventuels périphériques qui y sont connectés, reliés ensemble par des canaux électroniques de communication qui permettent un échange d'informations ;
- réseau distant : réseau accessible au moyen d'un terminal fixe via le réseau téléphonique commuté ;
- serveur : équipement informatique de type ordinateur détenant un certain nombre de ressources particulières qui sont mises à disposition d'autres équipements informatiques par l'intermédiaire d'un réseau ;
- serveur de service d'accès distant, ou serveur RAS (Remote Access Service en langue anglaise) : Serveur équipé d'un ensemble d'applications logicielles définissant un service qui permet à un équipement distant de se connecter à un réseau;
- serveur applicatif : serveur dédié à une tâche particulière ;
- serveur SMSC (Short Message Service Center en langue anglaise pour centre de service de messages courts) : serveur permettant le transfert de messages de type SMS ;
- message SMS (Short Message Service en anglais pour "service de message court") : court message, pouvant notamment contenir une information textuelle, qui peut être envoyé par l'intermédiaire d'un serveur SMSC vers un terminal destinataire ;
- serveur MMSC (Multimedia Message Service Center en langue anglaise pour centre de service de messages multimédia) : serveur permettant le transfert de messages de type MMS ;
- message MMS (Multimedia Message Service en langue anglaise, pour "service de message multimédia") : message multimédia, pouvant notamment incorporer du texte, de la vidéo, du son... qui peut être envoyé par l'intermédiaire d'un serveur MMSC vers un terminal destinataire ;
- URL : (Uniform Resource Locator en langue anglaise pour localisateur uniforme de ressource). Il s'agit dune méthode d'accès à un document distant sur le réseau Internet, ou d'une adresse à laquelle est mémorisée une information donnée ;
- terminal fixe : équipement électronique présentant une quelconque fonctionnalité spécifique (par exemple une fonctionnalité d'impression, une fonctionnalité de décodage de signaux de télévision, une fonctionnalité d'émission et/ou de réception de fax, une fonctionnalité de téléphonie selon la norme DECT...) et apte à communiquer avec un réseau distant par l'intermédiaire de liaisons câblées auxquelles il est, dans un état de fonctionnement habituel, connecté; un terminal fixe est utilisé en étant branché sur l'alimentation secteur ; il est donc destiné à être utilisé, de façon prolongée, dans un environnement fixe constant, domestique ou professionnel. Un terminal fixe tel que ceux intervenant dans le procédé selon l'invention peut être un terminal large bande, c'est à dire apte à échanger des informations à un débit supérieur ou égal à 1,544 Mbit/s (MégaBits par seconde), ou un terminal bande étroite.

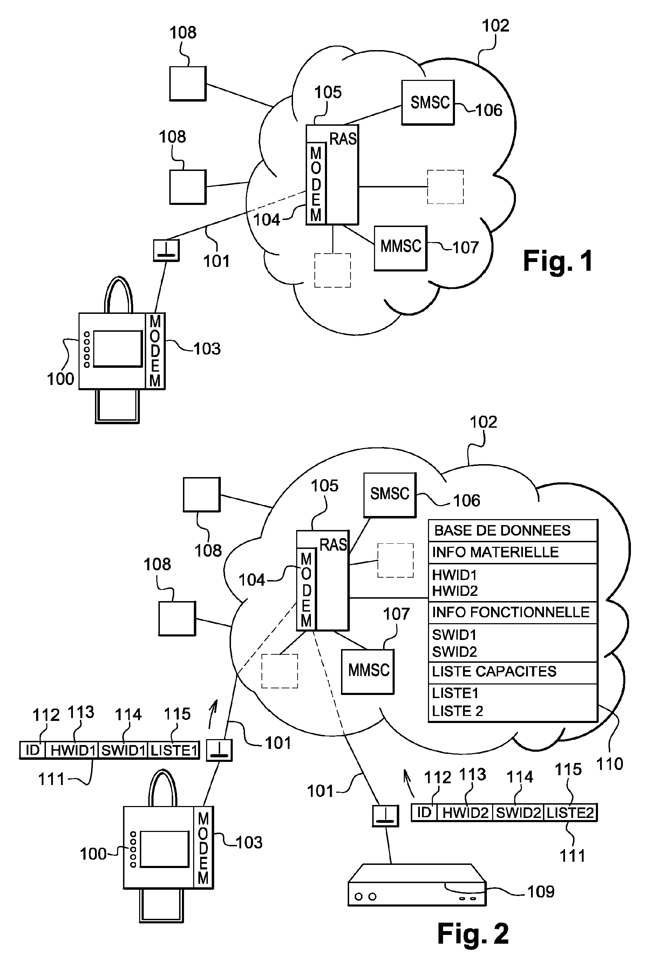

Le domaine de l'invention est, d'une façon générale, celui des réseaux informatiques au sens large de leur définition. Une représentation schématique d'un terminal fixe accédant à un réseau distant est représenté à la figure 1. Sur cette figure, un terminal fixe 100 est équipé de moyens de connexion à des liaisons câblées 101, correspondant dans l'exemple représenté au réseau téléphonique commuté (RTC). Pour accéder à un réseau distant 102 via les liaisons câblées 101, le terminal fixe 100 doit être équipé de moyens de connexion et d'échange de données adaptées aux liaisons câblées 101. Dans le cas du RTC, les moyens de connexion et d'échange de données sont typiquement constitués par un modem 103, qui peut être soit un modem externe au terminal 100, soit un modem interne se présentant sous la forme d'une carte électronique.

Pour établir une connexion entre le terminal fixe 100 et le réseau distant 102, le modem 103 doit par exemple appeler un modem 104 d'un serveur de type RAS 105 du réseau 102. Dans la pratique, le serveur RAS 105 peut comporter une pluralité de modems. En établissant une communication entre les modems 103 et 104, on définit un canal physique de communication en s'accordant sur une modulation à utiliser pour l'échange d'informations.

Outre le serveur RAS 105, le réseau distant 102 peut comporter une pluralité d'autres serveurs, notamment un serveur SMSC 106 et un serveur MMSC 107 connectés, éventuellement par l'intermédiaire d'autres équipements informatiques, au serveur RAS 105. Le réseau 102 peut comporter une pluralité d'autres serveurs, et notamment différents serveurs applicatifs.

Le terminal fixe 100 connecté au réseau distant 102 constitue un client du réseau 102. Le réseau 102 peut comporter une pluralité d'autres clients 108. Dans la pratique, les différents clients peuvent être des terminaux fixes de nature différente, la nature d'un terminal fixe désignant la fonctionnalité principale du terminal fixe considéré. Par exemple, la nature du terminal fixe peut correspondre à une imprimante, à un téléphone de type DECT associé à sa base fixe, à un décodeur de télévision numérique, à un fax.... Dans la pratique, les terminaux fixes pouvant accéder au réseau distant 102 peuvent également être de type différent, c'est à dire être des modèles différents d'une même nature de terminaux fixes, les différents modèles se distinguant les uns des autres par exemple par des fonctionnalités, accessoires à leur fonctionnalité principale, différentes.

### ARRIERE-PLAN TECHNOLOGIQUE DE L'INVENTION

Un réseau distant peut donc avoir à gérer des échanges de données avec un parc de terminaux fixes qui lui sont connectés, via des liaisons câblées, le parc de terminaux considéré pouvant être constitué de terminaux de nature et/ou de type différents. Or du fait de leur grande diversité, les terminaux constituant le parc considéré ont des capacités très diverses ; par exemple, certains sont aptes à recevoir des messages de type SMS, des images, des messages de type MMS, des messages sonores, alors que d'autres non.

Or, dans l'état de la technique, il n'existe pas à ce jour, pour un réseau distant donné, de possibilité de connaître les capacités matérielles et/ou fonctionnelles et/ou les capacités de communication des terminaux fixes susceptibles d'échanger des informations avec lui, ni même le nombre de terminaux qui lui sont connectés. Une telle carence peut notamment entraîner des dysfonctionnements dans les échanges de données si le réseau est soudain saturé du fait d'une quantité de messages d'une nature donnée plus importante que l'opérateur gérant le réseau ne l'avait prévu lors de l'allocation de ressources de communication aux serveurs appropriés du réseau. Une telle carence prive par ailleurs l'opérateur de la possibilité de faire des statistiques sur le nombre de terminaux susceptibles de recevoir tel ou tel type de messages, statistiques qui peuvent pourtant être commercialement intéressantes.

### DESCRIPTION GENERALE DE L'INVENTION

Le procédé selon l'invention propose une solution aux problèmes et inconvénients qui viennent d'être exposés. Dans l'invention, on propose que les terminaux fixes, qui sont dans une situation où ils sont susceptibles d'échanger des informations avec un réseau distant donné, procèdent à une opération d'identification auprès de ce réseau distant. A cet effet, on propose, dans l'invention, de transmettre un message d'identification depuis chaque terminal fixe concerné vers le réseau distant considéré, des données dudit message étant mémorisées dans une base de données du réseau distant. Le message d'identification est émis suite à la détection d'un événement particulier, temporel ou mécanique, intervenant au sein de chaque terminal fie considéré.

Avantageusement, le réseau distant constitue une base de données à partir des messages d'identification reçus, base de données commune pour l'ensemble des terminaux fixes, quels que soient leur nature et leur type.

L'invention concerne donc essentiellement un procédé d'identification d'un terminal fixe auprès d'un réseau distant, ledit terminal fixe étant apte à échanger des informations avec ledit réseau distant via des liaisons câblées, caractérisé en ce qu'il comporte notamment l'étape consistant à émettre, depuis le terminal fixe et vers le réseau distant, un message d'identification à enregistrer dans une base de données du réseau distant.

Le procédé selon l'invention peut comporter, en plus des caractéristiques principales qui viennent d'être mentionnées, une ou plusieurs caractéristiques supplémentaires suivantes :
- l'émission du message d'identification est réalisée via le réseau téléphonique commuté ou via le réseau numérique à intégration de services;
- l'émission du message d'identification est réalisée via un réseau câblé destiné notamment à véhiculer des signaux respectant un protocole Internet (IP), par exemple les protocoles TCP, UDP ou FTP connus de l'homme du métier, ou à véhiculer des signaux de télévision depuis un opérateur de télévision vers un terminal fixe de type décodeur de télévision numérique ;
- le message d'identification comporte au moins une information d'identification matérielle du terminal fixe ;
- le message d'identification comporte au moins une information d'identification fonctionnelle du terminal fixe ;
- le message d'identification comporte au moins une liste de capacités matérielles du terminal fixe ;
- le message d'identification comporte au moins une liste de capacités fonctionnelles du terminal fixe ;
- le message d'identification comporte au moins une liste de capacités de communication du terminal fixe ;
- le message d'identification est émis suite à la détection d'un événement particulier intervenant au niveau du terminal fixe ;
- l'événement particulier consiste en une détection d'une opération particulière effectuée sur le terminal fixe par un utilisateur du terminal fixe ;
- l'événement particulier consiste une opération de connexion du terminal fixe sur les liaisons câblées ;
- l'événement particulier consiste une pression exercée par l'utilisateur du terminal fixe sur une touche particulière dudit terminal ;
- l'événement particulier consiste en une détection d'une arrivée à terme d'un compte à rebours déclenché au sein du terminal fixe ;
- le message d'identification est émis depuis le terminal fixe vers le réseau distant sous la forme d'un message de type SMS ;
- le message d'identification est émis depuis le terminal fixe vers le réseau distant sous la forme d'un message respectant un protocole Internet ;
- le procédé comporte l'étape supplémentaire consistant à émettre, suite à la réception du message d'identification par le réseau distant, depuis le réseau distant vers le terminal fixe, un message d'accusé de réception du message d'identification ;
- le procédé comporte l'étape supplémentaire consistant à mettre à jour la base de données au sein du réseau distant en associant, après interprétation du message d'identification émis par le terminal fixe considéré, des identifications matérielles et/ou fonctionnelles de terminaux fixes d'une nature donnée, lesdites identifications correspondant à la nature du terminal fixe considéré, à la liste de capacités matérielles et/ou fonctionnelles et/ou de communication émise dans le message d'identification par le terminal fixe considéré ;
- le terminal fixe est du type téléphone DECT ;
- que le terminal fixe est du type imprimante ;
- le terminal fixe est du type décodeur de télévision numérique ;
- le terminal fixe est du type fax.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, déjà décrite, une représentation de principe d'un réseau distant susceptible de communiquer avec un terminal fixe ;
- à la figure 2, une représentation schématique d'un exemple de mise en oeuvre du procédé selon l'invention.

### DESCRIPTION DES FORMES DE REALISATION PREFEREES DE L'INVENTION

Les différents éléments apparaissant sur différentes figures auront conservé, sauf précision contraire, les mêmes références.

La figure 2 illustre un exemple de mise en oeuvre du procédé selon l'invention. On y retrouve les principaux éléments déjà présents sur la figure 1, à savoir un premier terminal 100 et son modem 103, les liaisons câblées 101, et le réseau distant 102. Ce dernier comporte toujours notamment le serveur RAS 105 équipé notamment du modem 104, le serveur SMSC 106 et le serveur MMSC 107 ; le réseau distant 102 peut toujours être connecté à d'autres clients 108, et notamment à un second terminal fixe 109, de nature différente du premier terminal fixe 100. Dans l'exemple représenté, le terminal fixe 100 est de nature imprimante, par exemple le poste nommé Photo Easy Printer MMS du déposant, et le terminal fixe 109 est du type décodeur de télévision numérique. Le terminal fixe aurait également pu prendre la forme d'un téléphone de type DECT associé à sa base, d'un fax...

Dans l'exemple représenté, les terminaux fixes 100 et 109 sont reliés au réseau distant par l'intermédiaire du réseau RTC matérialisé par les liaisons câblées 101. Dans d'autres exemples de mise en oeuvre du procédé selon l'invention, les liaisons câblées 101 peuvent être utilisées pour transmettre des informations depuis les terminaux fixes 101 et 109 selon d'autres moyens et/ou protocoles que ceux utilisés dans le cadre du RTC ; notamment, les liaisons câblées 101 peuvent être utilisées pour véhiculer des signaux selon un protocole adopté sur le RNIS, et/ou un protocole Internet (TCP/IP, UDP/IP, FTP/IP...), et/ou les liaisons câblées 101 peuvent constituer un réseau de transmission de signaux de télévision.

Selon le procédé de l'invention, les terminaux fixes 101 et 109, susceptibles d'échanger des données avec le réseau distant 102, émettent un message d'identification 111 vers le réseau distant 102. Un message d'identification peut notamment être reconnu grâce à un en-tête spécifique 112 qui le distingue des autres types de messages que le terminal peut émettre à destination du réseau distant 102. Les informations contenues dans les messages d'identification peuvent être relatives à un ou plusieurs éléments parmi les suivants :
- une information d'identification matérielle 113, qui donne une information relative à la nature du terminal fixe et à son modèle, par exemple en utilisant comme information d'identification matérielle un numéro de série du terminal considéré ;
- une information d'identification fonctionnelle 114, qui donne une information relative à la version du terminal fixe, plusieurs versions pouvant exister pour deux terminaux fixes présentant une même information d'identification matérielle ;
- une liste de capacités 115 du terminal considéré, ladite liste pouvant comporter une liste de capacités matérielles, et/ou une liste de capacités fonctionnelles, et/ou une liste de capacités de communication caractéristique du terminal considéré.
   Lorsque le réseau distant 102 reçoit de la part d'un terminal fixe un message d'identification, il mémorise, après reconnaissance du message d'identification 111 grâce à l'en-tête spécifique de ce dernier, une ou plusieurs informations précédemment mentionnées dans une base de données 110. Dans l'exemple illustré, le réseau distant 102 mémorise dans sa base de données l'ensemble des informations 113, 114 et 115 qui lui sont communiquées dans les messages d'identification. Dans l'exemple illustré, la base de données mémorise donc les informations d'identification matérielle HWID1 et HWID2, les informations d'identification fonctionnelle SWID1 et SWID2, et les listes de capacités LISTE1 et LISTE2, émises respectivement par le premier terminal fixe 100 et le deuxième terminal fixe 109.
   Dans d'autres exemples de mise en oeuvre du procédé selon l'invention, le réseau distant ne mémorise dans sa base de données 110 qu'une ou plusieurs des informations parmi les informations 113, 114 et 115. Par exemple, la base de données peut se contenter de mémoriser les informations d'identifications matérielle et fonctionnelle lorsque le réseau distant 102 reçoit un nouveau message d'identification 111 de la part d'un terminal fixe, et déterminer, à partir d'une seconde base de données non représentée, une liste de capacités correspondant aux informations d'identifications matérielle et fonctionnelle qui viennent d'être reçues. Une telle mise en oeuvre nécessite que la seconde base de données a préalablement associé une liste d'informations d'identifications matérielle et fonctionnelle à un ensemble de capacités.
   Dans tous les cas, un avantage important de l'invention est que la base de données 110 regroupe l'ensemble des informations d'identification matérielles et/ou fonctionnelles et/ou de capacités pour les terminaux ayant émis un message d'identification ; on obtient ainsi une base de données unique indépendamment du fait que les terminaux fixes ayant émis les messages d'identification peuvent être de nature et/ou de type différents.
   Le message d'identification 111 est avantageusement émis par le terminal fixe suite à la détection d'un événement temporel ou matériel sur le terminal considéré. Par exemple, on propose, selon un premier exemple de mise en oeuvre du procédé selon l'invention, d'émettre le message d'identification dès que le terminal fixe est branché sur les liaisons câblées 101. Dans un deuxième exemple, on propose d'émettre le message d'identification suite à une pression exercée par un utilisateur du terminal fixe sur une touche préalablement déterminée du terminal ; la touche en question peut être une touche réservée à l'émission d'un message d'identification, ou toute autre touche ; dans le deuxième cas, l'utilisateur peut alors émettre le message d'identification à son insu. Dans un troisième exemple, on propose d'émettre le message d'identification à la fin d'un compte à rebours mis en place au sein du terminal, ledit compte à rebours pouvant lui même être mis en marche suite à la détection d'un autre événement particulier sur le terminal fixe. Une fois arrivé à son terme, le compte à rebours peut être de nouveau initialisé ; l'émission de messages d'identification est alors cyclique, éventuellement périodique.
   Lorsque le réseau distant 102 reçoit le message d'identification 111, on propose, dans un exemple particulier de mise en oeuvre du procédé selon l'invention, d'émettre depuis le réseau distant vers le terminal fixe, par exemple via les liaisons câblées 101, un message d'acquittement de réception du message d'identification. A cet effet, on prévoit, par exemple, d'incorporer dans le message d'identification 111 un numéro d'appel du terminal fixe émetteur du message d'identification considéré, numéro d'appel permettant au réseau distant d'envoyer le message d'acquittement de réception au terminal fixe approprié.
   Avantageusement, les messages d'identification sont envoyés, via les liaisons câblées 101, sous la forme d'un message de type SMS émis depuis un des terminaux fixes connectés au réseau distant 102, la plupart des terminaux fixes concernés par la présente invention, c'est à dire les terminaux fixes aptes à communiquer sur un réseau distant, étant capables d'interpréter le format des messages SMS. Par exemple, on prévoit, dans l'invention, d'utiliser pour la transmission des informations d'identification un ou plusieurs champs particuliers existant dans la structure des messages SMS, notamment un ou plusieurs champs connus de l'homme du métier sous le nom de champ d'extension libre. D'autres types d'encapsulation peuvent cependant être utilisées, notamment des encapsulations conformes à des protocoles Internet (TCP/IP ; UDP/IP ; FTP/IP...), ou conforme au protocole SNMP (pour Simple Network Management Protocol en langue anglaise, protocole d'administration distante ou locale sur différents types de réseaux), pour transmettre les informations d'identification.
   Les paragraphes qui vont suivre donnent des exemples d'informations qui peuvent être contenues dans le champ 115 des messages d'identification.
- UAProfURL : contient une URL où accéder aux données relatives à certaines capacités matérielles et/ou fonctionnelles du terminal considéré.

La liste qui suit est une liste non exhaustive, présentée sous leur désignation normative, de capacités matérielles pouvant être communiquées par le terminal fixe au réseau distant :
- BitsPerPixel : indique le nombre de bits disponibles pour coder la couleur d'un pixel sur un écran du terminal ;
- ColorCapable : indique si le terminal dispose d'un écran couleur ;
- ImageCapable : indique si le terminal dispose d'un moyen de restitution d'images ;
- InputCharset : liste des caractères graphiques supportés par le terminal pour saisir du texte ;
- IsLocked : indique une identité du serveur sur lequel le terminal est verrouillé ;
- OutputCharset : liste des caractères graphiques supportés par le terminal pour restituer du texte ;
- ImagelnputCapable : indique si le terminal est capable de créer des images ;
- ScreenSize : indique, en nombre de pixels, la taille d'un écran de restitution d'images du terminal ;
- ScreenSizeChar : indique, en nombre de caractères, les dimensions d'un écran de restitution d'images du terminal ;
- SoundOutputCapable : indique si le terminal est équipé de moyens de restitution sonore ;
- TextlnputCapable : indique si le terminal permet la saisie de caractères alphanumériques ;
- VoicelnputCapable : indique si le terminal permet la capture de messages sonores, notamment en terme de reconnaissance vocale ;
- TAMCapable : indique si le terminal a des capacités de répondeur ;
- PrintrPaperSizes : indique la liste des formats de papier supportés par le terminal pour une fonctionnalité d'impression.

La liste qui suit est une liste non exhaustive, présentée sous leur désignation normative, de capacités fonctionnelles pouvant être communiquées par le terminal fixe au réseau distant :
- CcppAccept : indique la liste des formats de messages supportés par le terminal ;
- DownLoadableSoftwareSupport : indique si le terminal accepte le téléchargement de logiciels.

La liste qui suit est une liste non exhaustive, présentée sous leur désignation normative, de capacités de communication pouvant être communiquées par le terminal fixe au réseau distant :
- PhoneCapable : indique si le terminal a des capacités de téléphonie ;
- FaxCapable : indique si le terminal a des capacités pour recevoir et/ou émettre des fax ;
- FaxResolutionHorizontal: indique la résolution horizontale du terminal utilisé comme fax ;
- FaxResolutionVertical : indique la résolution verticale du terminal utilisé comme fax ;
- ColorFaxCapable : indique si le terminal peut émettre et/ou recevoir des fax en couleur ;
- VcardCapable : indique si le terminal supporte les Cartes virtuelles;
- vcalendarCapable : indique si le terminal supporte des calendriers virtuels;
- ImelodyCapable : indique si le terminal supporte des messages de type iMelody ;
- MMSCapable : indique si le terminal supporte les messages de type MMS ;
- NumberMMSGateways : indique le nombre de points d'accès du terminal pour recevoir des messages de type MMS ;
- NABCapable : indique si le terminal supporte le NAB (Network Adress Book en anglais pour carnet d'adresse sur réseau);
- InternetCapable : indique si le terminal a des moyens de connexion au réseau Internet ;
- NumberlnternetProviders : indique le nombre de fournisseurs d'accès au réseau Internet sélectionnables au moyen du terminal ;
- EmailCapable : indique si le terminal a des capacités de messagerie électronique ;
- NumberEmailProviders : indique le nombre de fournisseurs d'accès à des boîtes à lettres électroniques sélectionnables au moyen du terminal ;
- IRDACapable : indique si le terminal supporte les signaux infrarouge;
- WLANCapable : indique si le terminal supporte des moyens de connexion à des réseaux locaux sans fil;
- NumbersSMSGateways : indique le nombre de points d'accès du terminal pour émettre et/ou recevoir des messages de type SMS.

## Revendications

1. Procédé d'identification d'un terminal fixe (100 ;109) auprès d'un réseau distant (102), ledit terminal fixe étant apte à échanger des informations avec ledit réseau distant via des liaisons câblées (101), **caractérisé en ce qu'**il comporte notamment l'étape consistant à émettre, depuis le terminal fixe et vers le réseau distant, un message d'identification (111) à enregistrer dans une base de données (110) du réseau distant, le message d'identification comportant au moins une information d'identification matérielle (113) du terminal fixe, et/ou une information d'identification fonctionnelle (114) du terminal fixe, et/ou une liste de capacités de communication du terminal fixe.

2. Procédé selon la revendication précédente **caractérisé en ce que** l'émission du message d'identification est réalisée via le réseau téléphonique commuté ou via le réseau numérique à intégration de services.

3. Procédé selon la revendication 1 **caractérisé en ce que** l'émission du message d'identification est réalisée via des liaisons câblées destinées notamment à véhiculer des signaux respectant un protocole Internet.

4. Procédé selon la revendication 1 **caractérisé en ce que** l'émission du message d'identification est réalisée via un réseau câblé destiné notamment à véhiculer des signaux de télévision depuis un opérateur de télévision vers un terminal fixe de type décodeur de télévision numérique.

5. Procédé selon l'une au moins des revendications précédentes **caractérisé en ce que** le message d'identification comporte au moins une liste de capacités fonctionnelles du terminal fixe.

6. Procédé selon l'une au moins des revendications précédentes **caractérisé en ce que** le message d'identification comporte au moins une liste de capacités de communication du terminal fixe.

7. Procédé selon l'une au moins des revendications précédentes **caractérisé en ce que** le message d'identification est émis suite à la détection d'un événement particulier intervenant au niveau du terminal fixe.

8. Procédé selon la revendication précédente **caractérisé en ce que** l'événement particulier consiste en une détection d'une opération particulière effectuée sur le terminal fixe par un utilisateur du terminal fixe.

9. Procédé selon la revendication précédente **caractérisé en ce que** l'événement particulier consiste une opération de connexion du terminal fixe sur les liaisons câblées.

10. Procédé selon la revendication 8 **caractérisé en ce que** l'événement particulier consiste une pression exercée par l'utilisateur du terminal fixe sur une touche particulière dudit terminal.

11. Procédé selon la revendication 7 **caractérisé en ce que** l'événement particulier consiste en une détection d'une arrivée à terme d'un compte à rebours déclenché au sein du terminal fixe.

12. Procédé selon l'une au moins des revendications précédentes **caractérisé en ce que** le message d'identification est émis depuis le terminal fixe vers le réseau distant sous la forme d'un message de type SMS.

13. Procédé selon l'une au moins des revendications précédentes **caractérisé en ce qu'**il comporte l'étape supplémentaire consistant à émettre, suite à la réception du message d'identification par le réseau distant, depuis le réseau distant vers le terminal fixe, un message d'accusé de réception du message d'identification.

14. Procédé selon les revendications 1, 8 et 9 **caractérisé en ce qu'**il comporte l'étape supplémentaire consistant à mettre à jour la base de données au sein du réseau distant en associant, après interprétation du message d'identification émis par le terminal fixe considéré, des identifications matérielles et/ou fonctionnelles de terminaux fixes d'une nature donnée, lesdites identifications correspondant à la nature du terminal fixe considéré, à la liste de capacités matérielles et/ou fonctionnelles et/ou de communication émise dans le message d'identification par le terminal fixe considéré.

15. Procédé selon l'une au moins des revendications précédentes **caractérisé en ce que** le terminal fixe est du type téléphone DECT.

16. Procédé selon l'une au moins des revendications 1 à 14 **caractérisé en ce que** le terminal fixe est du type imprimante.

17. Procédé selon l'une au moins des revendications 1 à 14 **caractérisé en ce que** le terminal fixe est du type décodeur de télévision numérique.

18. Procédé selon l'une au moins des revendications 1 à 14 **caractérisé en ce que** le terminal fixe est du type fax..
